# EUROPEAN PATENT APPLICATION

(11) **EP 0 549 210 A2**
(43) Date of publication of application: **30.06.1993**
(21) Application number: 92311320.3
(22) Date of filing: 10.12.1992
(51) Int. Cl.: C08L 43/04

(54) **Crosslinkable polymeric conposition**

(30) Priority: 24.12.1991 GB 9127364; 19.02.1992 GB 9203541
(71) Applicant: Borealis Holding A/S, DK-2800 Lyngby (DK)
(72) Inventor: Lien, Klaus, B-2070 Zwinjndrecht, Antwerp (BE); Reid, William Bain, CH-1217 Meyrin 2 (CH)
(74) Representative: Bannerman, David Gardner

(57) **Abstract**

A composition capable of being crosslinked by the action of water in the presence of a silanol condensation catalyst comprising (i) a silyl polymer and (ii) at least one functional organic compound I which comprises at least one hydroxyl group and at least one other group which is selected from the group consisting of amino and carboxyl groups is disclosed.

In particular, hydroxy carboxylic acids and alkanolamines can be used. Their function is to inhibit precure in crosslinkable silyl polymers. Masterbatch concentrates comprise the functional organic compound I and an inert polymer.

## Description

The present invention relates to crosslinkable organic polymer compositions. More particularly the present invention is concerned with crosslinkable compositions comprising organic polymers containing hydrolysable silane groups, which polymers can be thermoformed into shaped articles, for example cable insulation or pipe, and subsequently crosslinked by contacting the articles with water or steam in the presence of a so-called "silanol condensation catalyst".

It is known that organic polymers containing hydrolysable silane groups, e.g. Si(OMe)₃ can be crosslinked by the action of water, preferably in the presence of a silanol condensation catalyst. A number of methods are known for producing such crosslinkable organic polymers. One method comprises copolymerising unsaturated organic monomers, for example, ethylenically unsaturated or vinyl monomers, with unsaturated silane compounds containing hydrolysable groups. Examples of this method are described in GB-A-2028831 and GB-A-2039513 which disclose the preparation of crosslinkable copolymers of ethylene and an ethylenically unsaturated silane compound by copolymerising the monomers at relatively high temperatures and pressures in the presence of a free radical polymerisation initiator. Another example of this copolymerisation method is described in GB-A-1415194 which discloses the preparation of crosslinkable copolymer by contacting ethylene and a terminally unsaturated silane compound, optionally with other olefinically unsaturated comonomer, with certain defined Ziegler catalysts under polymerisation conditions which preferably employ relatively low temperatures and pressures.

It is also known that polymers crosslinkable by the action of water and a silanol condensation catalyst can be prepared by grafting an unsaturated silane compound on to a preformed polymeric material. Grafting processes of this type can be carried out by heating together a base polymer, for example polyethylene, an unsaturated silane compound bearing one or more hydrolysable groups, a grafting initiator and optionally a silanol condensation catalyst, under conditions such that the unsaturated silane compound is grafted on to the base polymer. Examples of this method are disclosed in GB-A-1357549, GB-A-1234034, GB-A-1286460, US 3802913, US 4117063, US 4136132 and US 4228255. Examples of commercial processes which employ a grafting reaction of this type are the SIOPLAS and the MONOSIL processes. (SIOPLAS and MONOSIL are registered trade marks). In the SIOPLAS process, the base polymer is heated with the unsaturated silane in the presence of a grafting initiator and the product is extruded and pelleted to produce a pelleted silane-grafted thermoplastic polymer. The pelleted polymer can then be fed with a silanol condensation catalyst added as such or, preferably via a masterbatch blend of polyethylene and said catalyst to a thermoforming process for fabricating shaped products. These shaped products are then crosslinked by exposure to water or steam. In the MONOSIL process eg as described in US 4117195 and US 4351790, the base polymer, the unsaturated silane, the grafting initiator and the silanol condensation catalyst are fed simultaneously to a special extruder eg as described in GB 964428 in which grafting occurs "in situ" and crosslinkable products, eg cable or pipe, are directly extruded; EP 0163865A describes another 1 step process. These products can be crosslinked by exposure to steam or water under the influence of the silanol condensation catalyst.

Other known methods for forming polymeric materials having hydrolysable silane groups are the "transesterification" methods wherein a copolymer having exchangeable functions such as alkoxy groups (as, for example, in ethylene/ethyl acrylate copolymer) or carboxylate groups (as, for example, in ethylene/vinyl acetate copolymer) is treated with a suitable silane compound in the presence of a special ester-exchange catalyst. For example, European patent application 4752 discloses a method for the production of water-curable silane-modified alkylene-alkyl acrylate copolymers which comprises reacting an alkylene-alkylacrylate copolymer, e.g. ethylene-ethyl acrylate, with a silane in the presence of an organotitanate catalyst, e.g. titanium tetraisopropylate. Examples of suitable silane compounds which can be used in this method are acetoxy propyl trimethoxy silane, acetoxy propyl triethoxy silane, methacryloxypropyl trimethoxy silane, acryloxypropyl trimethoxy silane, methacryloxypropyl triethoxysilane and acryloxypropyl triethoxy silane. In another example of the transesterification method ethylene/vinyl acetate copolymer can be reacted with a suitable silane compound bearing hydrolysable groups and having esterified carboxylic acid groups which exchange with the acetate groups on the copolymer. A suitable silane compound is 4-[tri(m)ethoxysilyl] butanoic acid (m)ethyl ester.

Polysiloxane-modified copolymers prepared by reacting a mixture containing an alkylene-alkyl acrylate copolymer and a polysiloxane in the presence of an organo titanate catalyst are also known. For example, European Patent No. 49155 discloses the production of such polysiloxane-modified copolymers and European patent application EP 120115 discloses compositions comprising a polysiloxane and an organo titanate and the use thereof in the production of such polysiloxane-modified alkylene-alkyl acrylate copolymers.

The present invention relates to crosslinkable organic polymers having pendant, hydrolysable silane groups. These polymers (hereinafter referred to as "silyl polymers") may be prepared, as described above, by copolymerising unsaturated organic monomers with unsaturated silane compounds containing hydrolysable groups, by grafting an unsaturated silane compound on to a preformed polymeric material or by the transesterification methods using a monomeric silane, e.g. as disclosed in European patent application 4752. The silyl polymers can be fabricated to form a large variety of useful articles by conventional techniques, for example, extrusion, injection moulding, blow-moulding and film-blowing processes. The crosslinking step is generally carried out subsequent to fabrication of the article because the crosslinked polymer cannot in general be satisfactorily thermoformed.

A problem encountered with silyl polymers is that during thermoforming operations the polymer can undergo premature crosslinking (also known as "scorching") which can lead to difficulties in the fabrication of articles from the polymer or to the production of articles having unsatisfactory physical and mechanical properties. The problem is particularly serious in the production of extruded wire and cable insulation wherein it is important to provide an extruded layer of insulation which is substantially free from surface roughness. Wire or cable insulation which has a relatively rough surface can suffer mechanical damage (for example, tearing and snagging) leading to insulation failure. The roughness can also lead to electrical stress and insulation breakdown in higher voltage applications.

One method of reducing premature crosslinking proposed in GB-A-1357549 is to mould or extrude articles from silyl polymers in the absence of the silanol condensation catalyst and then to contact the produced article with an aqueous dispersion or solution of a tin carboxylate to cause the crosslinking. However, in many applications it is preferred to include the silanol condensation catalyst as a component of the polymer composition as this leads in general to higher crosslinking rates and to more complete crosslinking particularly in articles having thick cross section.

It has now been discovered that certain functional organic compounds containing hydroxyl carboxylic and/or amino groups can reduce premature cross linking, usually without significantly reducing the cure rate in the presence of a silanol condensation catalyst and water.

The present invention provides the use as a premature cross-linking inhibitor for silyl polymers of a functional organic compound which comprises at least one hydroxyl group and at least one group selected from the group consisting of amino and carboxyl groups.

The present invention also provides a composition capable of being crosslinked by the action of water in the presence of a silanol condensation catalyst, the composition comprising (i) a silyl polymer and (ii) at least one functional compound I which comprises at least one hydroxyl group and at least one group selected from the group consisting of amino and carboxyl groups. There is also provided a composition capable of being crosslinked by the action of water comprising (i) a silyl polymer and (ii) at least one compound I and (iii) a silanol condensation catalyst, especially a metal carboxylate.

The present invention also provides a method of preparing a moisture cross linkable composition which comprises mixing (i) and (ii) in the presence of an added silanol condensation catalyst. Also is provided a masterbatch for adding to polymer (i), the masterbatch comprising an inert polymer and (ii) and especially added silanol condensation catalyst, and furthermore there is provided a method of forming a cross linked polymer which comprises contacting with water a cross linkable composition of the invention, especially one already thermoformed and in particular one comprising (i), (ii) and especially in the presence of a silanol condensation catalyst. There is also provided a method of curing a silyl polymer, which comprises blending a composition comprising silyl polymer (i) with a masterbatch comprising inert polymer and compound I, said composition and/or masterbatch comprising added silanol condensation catalyst, and then contacting with water the blend obtained. The present invention also provides a combined inhibitor and cross linking catalyst for silyl polymers, which comprises and, may preferably consist essentially of the functional compound (ii) and silanol condensation catalyst and preferably a hindered phenol or amine.

The silyl polymer employed in the composition of the present invention is, as mentioned above, an organic polymer containing pendant hydrolysable silane groups which is cross linkable by the action of water in the presence of a silanol condensation catalyst. The polymer usually has a carbon backbone and especially substantially only a carbon backbone. The backbone preferably comprises at least a majority of, and preferably substantially only, hydrocarbon groups. In particular apart from the silane units the silyl polymer preferably comprises polymerised olefin units and especially substantially comprises said units. Suitable olefin units are those from aliphatic monoalpha olefins eg of 2-10 carbons such as ethylene, propylene butene-1, 4-methyl pentene-1, hexene-1, octene 1; preferably said olefin units are derived from one aliphatic alpha olefin especially ethylene but optionally with other aliphatic olefin units. Preferably the silyl polymer is an ethylene polymer containing pendant, hydrolysable silane groups. Such ethylene polymers can comprise up to 40% eg up to 30% by weight of comonomer units other than ethylene and silane units. Preferably however, the ethylene polymer comprises less than 10% by weight of such other monomers. Suitable further comonomers include, for example vinyl esters, alkyl (meth) acrylates, unsaturated ethers, unsaturated carboxylic acids and derivatives of (meth) acrylic acid and aromatic olefins such as styrene. Most preferably, the further comonomer, if present, is used in amount of from 1 to 20 per cent by weight of the total weight of the silane copolymer; however most preferably, the silyl polymer is a copolymer of ethylene units and silane units only. Preferred silyl polymers and references to their methods of manufacture are described above. Preferred silyl polymers are those prepared by copolymerising ethylene and an unsaturated silane compound having one or more hydrolysable groups preferably in the presence of a free radical initiator and optionally together with one or more other monomers copolymerisable therewith, or those prepared by graft copolymerising such an unsaturated silane on to a base polymer in the presence of a grafting initiator. Particularly preferred silyl polymers are those prepared by copolymerising ethylene and an unsaturated silane compound having one or more hydrolysable groups, optionally together with one or more other unsaturated compounds, at a temperature of 150 to 400°C and a pressure of 1000 to 4000 bar (100 to 400 MPa) in the presence of a free radical polymerisation initiator.

The hydrolysable ethylenically unsaturated silane compound copolymerised with the alpha-olefin or polymer thereof is preferably a compound having the general formula; R¹SiR²ₘY₃₋ₘ wherein R¹ represents an ethylenically unsaturated hydrocarbyl or hydrocarbyloxy hydrocarbyl group each usually of 2-10, especially 2-6, carbon atoms, or an ethylenically unsaturated carboxy hydrocarbyl group eg with 3-18 carbons in the unsaturated carboxylic part and 1-10 eg 2-4 carbons in the hydrocarbyl part; R² represents an aliphatic saturated hydrocarbyl group (eg of 1-20 such as 1-6 carbon atoms or an aromatic hydrocarbyl group eg of 6-19 carbon atoms; Y represents a hydrolysable organic group eg of 1-15 carbon atoms and m is 0, 1 or 2. If the compound has more than one Y, the groups Y may be the same or different. Group Y may be an alkoxy group eg of 1-10 carbon atoms, acyloxy group eg of 1-10 carbon atoms or a mono or di alkylamino group having with 1-8 carbons in each alkyl group or a mono or diarylamino group with 6-13 carbons in each aryl group. Preferably R¹is vinyl, allyl, isopropenyl, butenyl, cyclohexenyl or 3-acryloxy propyl or 3-methacryloxypropyl; preferably Y is methoxy, ethoxy, formyloxy, acetoxy, propionyloxy, alkylamino or arylamino; and preferably R² is methyl, ethyl, propyl, decyl or phenyl.

Particularly suitable unsaturated silane compounds are those having the general formula CH₂=CHSi(OZ)₃ wherein Z is a hydrocarbyl group having 1 to 8 carbon atoms, preferably 1 to 4 carbon atoms. Most preferably, the unsaturated silane is selected from the group consisting of vinyl trimethoxy silane, vinyl triethoxysilane and vinyl triacetoxy silane.

The silyl copolymer preferably contains from 0.01-10% such as 0.1 to 10% by weight, more preferably 0.5 to 5% or 0.7-2% by weight of copolymerised units or grafted units of the silane compound (based on the weight of silane copolymer). The Melt Index of the silane copolymer is usually 0.02 -50g/10 mins, e.g. 0.1-15 (measured according to ASTM D-1238 condition E, 190°C with 2.16 kg load as are all Melt Index figures given in this specification).

The functional compound I may be a solid or liquid at 25°C but is preferably a solid with melting point of not exceeding 180°C eg 100-180°C, its boiling point, if any, is usually above 100°C under 0.1 mm Hg pressure. Advantageously it does not significantly decompose on heating at 180°C, in particular in an inert atmosphere. It may or may not be hygroscopic.

The functional organic compound I contains at least 2 functional groups, namely at least one hydroxyl, and at least one of carboxyl and amino groups. There are particularly a total of 2-10 of functional groups in the compound I. While other non hydrocarbon groups may be present in the compound apart from said specified groups, such as carboxylate ester and ether groups, preferably the compound I consists of an organic hydrocarbyl group R¹ eg of 1-20 such as 2-10 carbon atoms substituted by at least 2 of said functional groups. The hydrocarbyl group may be aliphatic eg from an alkane of 1-8 carbons or alkene of 2-8 carbons, or cycloaliphatic eg from a cycloalkane eg of 5-8 carbons such as from cyclohexane or aromatic eg from an aromatic hydrocarbon eg of 6-20 carbons, such as from benzene or naphthalene, either of which may optionally have at least 1 nuclear substituent eg an alkyl or alkoxy group of 1-16 carbons eg 1-4 or 10-16 carbons, such as methyl, ethyl or dodecyl, or araliphatic eg from an araliphatic hydrocarbon eg of 7-21 carbons such as aralkane such as toluene which may optionally have at least one nuclear substituent eg an alkyl or alkoxy group of 1-16 carbons, eg as described above.

The functional compound I contains at least 1 hydroxyl, and at least one of carboxyl and amino groups. The essential carboxyl groups may or may not be in the form of an acid, an anhydride or acid chloride preferably in the form of an acid, but are not in the form of carboxylate esters, though such groups may also be present. The or each amino group may be a primary, secondary or tertiary amino group but preferably each amino group is a secondary group and particularly free of secondary amino groups as well. The hydroxyl group is present as such, though etherified or esterified hydroxyl groups (eg of 1-10 carbons such as methoxy, ethoxy or acetoxy groups) may be present but not to constitute an essential functional group.

The compound I may contain at least one hydroxyl and at least one carboxyl group, preferably II one carboxyl and one hydroxyl, or III one carboxyl and at least 2 hydroxyl eg 2-6 hydroxyl groups, or especially IV at least 2 carboxyl eg 2-6 carboxyl groups and one hydroxyl group, or V at least 2 eg 2-6 carboxyl groups and at least 2 eg 2-6 hydroxyl groups. Advantageously the hydroxyl and carboxyl groups are bonded to an aliphatic hydrocarbyl group eg a saturated one of 1-10 carbon atoms or unsaturated one of 2-10 carbons each especially a linear one of 2-8 carbons, or an aromatic hydrocarbyl nucleus eg of 6-13 carbons. Examples of compounds of formula II are ascorbic acid, of formula III are glycollic, lactic, 2-hydroxypropionic and salicylic acids, of formula IV are citric acid and tannic acid (a polymeric glycoside of gallic acid containing carboxyl groups), and of formula V is mucic acid.

The compound I may also contain at least one eg 1-4 amino groups and at least one eg 1-6 eg 2-5 hydroxyl groups, which may be attached to an aliphatic backbone such as of 2-8, eg 2 or 3 carbons especially a saturated aliphatic hydrocarbyl chain eg ethylene or 1,2-propylene. Examples of such compounds are amino mono ols VI such as ethanolamine, propanolamine and isopropanolamine, aminopolyols VII such as diethanol and di isopropanol - amine and tri ethanolamine and tri isopropanolamine.

The amino hydroxy compound may also be a heterocyclic compound with 1-4 N ring heteroatoms and 1-4 nuclear hydroxyl groups and especially 3-20 carbon atoms. Each heteroatom may be in a ring which is fused or non fused to another N heterocyclic ring or to an aromatic ring eg benzene. Preferred are compounds VIII with one N-heterocyclic ring (eg with 1 or 2 ring N atoms) fused to an aromatic group with 1-3 ring hydroxyl groups in the heterocyclic or aromatic ring; examples of such compounds are hydroxy quinoline such as 2-hydroxy quinoline and 8-hydroxy quinoline. Other preferred compounds IX are single ring C-hydroxy - N heterocyclic compounds, especially those with a 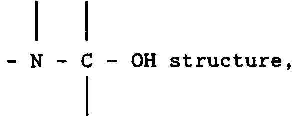
such as barbituric acid.

Most preferred compounds I are aliphatic hydroxy acids with 2-4 carboxyl groups and 1-6 hydroxyl groups and amino alcohols with a tertiary N atom and at least 2 hydroxyl groups.

The compositions of the invention preferably also contain a phenolic or amine antioxidant, in particular for stabilizing the shaped cured silane polymer during use, e.g. in a buried cable.

The phenolic or amine antioxidant is preferably an aromatic compound, which is an amine or hindered phenol.

The curable compositions usually contain 0.01-10% eg 0.01-5% and especially 0.05-0.5% or 0.5-5% of the functional compound I and 0-10% preferably 0.01-10% and especially 0.1-0.5% of the amine or hindered phenol, based on the weight of the silyl polymer. The molar ratio of compound I to phenol or amine is usually 1-10:10-1 such as 1-4:9-6.

The curable compositions usually contain at least an amount of the compound I effective to inhibit the precure resulting from the presence of any traces of water in the starting components and from any moisture which enters the composition during storage, handling or processing eg melt mixing up to the time that water is deliberately added for cross linking.

The compositions of the invention preferably also contain a silanol condensation catalyst.

The term "silanol condensation catalyst" is used in this specification as is conventional in the art to refer to a catalyst for the hydrolysis of SiY eg Si-0 alkoxy groups in the silane copolymer and not in respect of catalysts for the condensation between Si-OH groups of silane copolymers.

Preferred classes of silanol condensation catalysts are organic and inorganic acids eg strong acids and alkalis and amines , and compounds of metals eg of Groups VIII or IB-IVB. Specific examples of the silanol condensation catalyst are dibutyl tin maleate and dibutyl tin dilaurate.

The quantity of silanol condensation catalyst employed in the crosslinkable composition of the present invention or applied direct to articles formed from the composition is suitably in the range 0.001 to 3.0 moles, preferably in the range 0.003 to 0.3 eg 0.005 to 0.05 moles per mole of silyl units in the silyl polymer, or 0.001-1% such as 0.005-0.5% or 0.005-0.1% especially 0.01-0.05%.

The quantity of the silanol condensation catalyst generally is in the range of 0.001 to 10% by weight, preferably 0.01 and 5% by weight, most preferably 0.01-0.1 or 0.03 to 3% by weight, relative to the quantity of silyl polymer in the composition. The weight ratio of silanol catalyst, especially when an organotin compound, to compound I may be less than 10:1 or 2:1 especially less than 0.4:1 such as 0.005-2:1 eg 0.01-1:1 or 0.01 - 0.4:1 eg 0.06-0.3:1 or 0.02-0.1:1, preferably the organotin carboxylate and any carboxylate compound I contain between them at least three times the molar amount of carboxylate groups in I to moles of organotin compound. The quality of compound I relative to the weight of silyl polymer is usually 0.05-5:100 eg 0.05-1.5:100 such as 0.05-0.6:100. Particularly when the catalyst is the ester of the P or S oxyacid eg a phosphite antioxidant and especially when compound I is an alkanolamine such as tertiary alkanolamine eg triethanol amine or tri isopropanolamine, the weight ratio of compound I to silyl polymer is usually more than 0.02:100, such as more than 0.1:100 and especially more than 0.2:100, and the weight ratio of compound I to ester catalyst is usually more than 0.02:1 eg 0.1:1 to 10:1 such as 0.3:1 to 3:1.

The composition of the present invention comprising the silyl polymer, and the precure inhibitor I, optionally with a silanol condensation catalyst and/or any other ingredients of the composition, can be prepared by a variety of techniques including, for example, direct blending or compounding of the ingredients, the use of masterbatch techniques or by forming the silyl polymer "in situ" in the presence of the precure inhibitor.

The silanol condensation catalyst (and phenol or amine, if present) and optionally the compound I may be preblended in a masterbatch concentrate with a suitable inert thermoplastic polymer compatible with the silyl polymer, such as a polyethylene eg low density or linear low density polyethylene or ethylene vinylacetate or ethylene ethyl acrylate copolymer. The masterbatch may contain 0% or 0.01-10 eg 0.1-5% of the compound I and 0.01-10% eg 0.1-3% of the silanol condensation catalyst and 0-40% of the hindered phenol or amine based on the weight of the inert polymer. The compound I may be in the masterbatch and/or in the silyl polymer composition; liquid inhibitor I may be impregnated or soaked into the silyl polymer or inert thermoplastic polymer. The masterbatch may contain other additives providing other properties to the masterbatch and thus the curable composition; examples of such additives are fillers such as chalk, talc, mica and silica, flame retardant material such as metal hydroxides eg aluminium hydroxide or magnesium hydroxide or conducting compounds such as carbon black, metal deactivators (eg salicylaldehyde oximes) lubricants, water tree inhibitors, foaming agents and pigments. If desired these other additives may be mixed directly with the silyl polymer rather than via a masterbatch. Preferably the masterbatch is prepared by blending the above ingredients with the inert polymer and then the masterbatch is blended with silyl polymer usually with amounts of 50-99 parts eg 80-98 parts of the latter blended with 1-50 parts of the former, especially 2-20 parts. The final curable compositions may contain 60-100% eg 90-99% of the silyl copolymer and 0-40% eg 1-10% of this inert polymer from the masterbatch. If desired the composition of the invention may be blended with compatible polymeric materials eg polyethylene, polypropylene, ethylene ethyl acrylate copolymer or ethylene alpha olefin copolymers eg LLDPE. The compositions of the invention including the masterbatch concentrate may be made by blending the polymer (i) with the other ingredients in an extruder, blender or mill and/or other ingredients which are liquid may be absorbed into the polymer granules, with elevated temperatures and/or use of intensive mixing to increase the rate of absorption of the liquids. If desired instead of mixing undiluted compound I with the silyl polymer and/or inert polymer, the compound I may be mixed, when dissolved in an inert solvent, with solid or molten polymer and then the solvent evaporated.

Instead of mixing preformed graft silyl polymer with the compound I and other ingredients if desired, it is also possible to prepare the cross linkable composition of the invention by grafting with unsaturated silane in situ in the presence of the compound I a base polymer, for example low density polyethylene, linear low density polyethylene, ethylene/ethyl acrylate copolymer or ethylene/vinyl acetate copolymer. The compound I can, for example, be added to the base polymer prior to or during the performance of the grafting reaction.

A crosslinkable composition according to the present invention comprising the silyl polymer, the compound I and, optionally other ingredients, can for example be prepared directly in the form of crosslinkable finished articles by extruding a base polymer, e.g. polyethylene, together with the compound I, an unsaturated silane compound for grafting of the type described earlier in this specification, a free radical catalyst, i.e. initiator for grafting (e.g. an organic peroxide). This method can be applied for example in the well-known MONOSIL (RTM) process for the production of insulated wire and cable, but preferably graft initiators such as peroxide are absent and the cure is with water.

The composition of the present invention can be used to manufacture crosslinked products using the technology known in the manufacture of articles from conventional silyl polymers. For example, the composition can be used in blow-moulding, injection-moulding, film-blowing, calendering, extrusion, roto-moulding and extrusion-coating techniques. The composition is particularly preferred for wire and cable coating applications. Wire and cable insulations produced by extrusion coating using the composition of the present invention can exhibit improved surface finish. Compositions of this invention can have the benefit of reduced metal ion content, and those in which the compound I is a liquid can be produced more easily than ones in which it is a solid.

The compositions of the invention which comprise the silyl polymer and the compound I should preferably be prepared and maintained in a moisture free atmosphere until ready for use.

The compositions of the present invention can be crosslinked by exposure to water eg at 10-150°C and especially at 50-100°C. Cure times can be 0.1-500 hr, preferably 0.5-30 hr depending on the concentration of catalyst (iii) and the temperature. The crosslinking can be effected by simply storing under ambient conditions of temperature and humidity, storing in a humid atmosphere or by treating with water or steam or moisture. For example, the compositions can be crosslinked, normally after forming into shaped products, by being passed through a water bath, sprayed with water or stored, in a steam-filled cabinet. If desired the water bath may contain some ester antioxidant.

The water needed for hydrolysis and condensation of the silane groups can be included in the polymer composition. For example, water can be mixed into the polymer composition with another substance which is miscible with the polymer, eg propylene glycol, or the water can be physically or chemically bound to a substance which is miscible with the polymer eg in the form of water of crystallisation.

The present invention includes a method for forming a shaped, crosslinked product from the stabilised, crosslinkable composition of the present invention which method comprises thermoforming the product and then crosslinking by exposure to water. Preferably the thermoforming is extrusion coating of an electrical conductor. For example, reels or drums of wire or cable which have been extrusion-coated with a silyl polymer containing condensation catalyst are preferably exposed to moisture at elevated temperature to effect crosslinking of the silyl polymer. The exposure can take the form of immersion in a tank of hot water at about 80°C or exposure to low pressure steam at about 100°C in an enclosure commonly termed a "sauna". The length of time required to crosslink the silyl polymer to the extent that it will comply with the requirements of the appropriate specification depends on the time needed to raise the temperature of the wire or cable and the thickness of the silyl polymer coating. Typically, a reel containing 2 km of 25 mm² cable insulated with a 1.5 mm thick layer of silyl polymer will have to be treated for about 6-30 hours to achieve the desired degree of crosslinking using these techniques.

The invention is illustrated in the following Examples.

### Example 1

Ethylene was copolymerised with vinyl trimethoxy silane to give a low density polyethylene with 1.14 wt% vinyl trimethoxy silane units (hereafter called silyl polymer) of Melt Index (0.4 g/10 mins). The silyl polymer was pelletized and mixed in a Brabender Plasticorder mixer at 180°C under nitrogen for 5 minutes in a 95:5 weight ratio with pellets of a catalyst - containing master batch of low density polyethylene (M1 of 2g/10 min at 190° under 2.16 kg) (according to ASTM D1238E) containing 0.7% of commercial dibutyltin maleate and 3.5% of a phenolic antioxidant which is the tetrakis ester of pentaerythritol and bis 3,3-(3,5-ditertbutyl-4-hydroxyphenyl) propionic acid sold by Ciba Geigy under the Trade Mark IRGANOX 1010) to give a polymer composition. 1.0% by weight (based on the weight of silyl polymer) of a specified compound I (as detailed below) was also added with the other ingredients into the mixer.

Each polymer composition obtained was cut into small chips (about 2 x 2 x 2 mm) and analysed for gel content initially and then after immersion in water at 90°C for various times. The gel content, which is a function of the amount of crosslinking, was determined by a method based on ASTM D 2765 from the percentage not dissolved in boiling xylene at 140°C after 24 hours: in each case 20-30 chips were placed in pouches in the xylene. The gel content of chips in three such pouches were determined each time and an average obtained.

The additives were (A) citric acid, (B) mucic acid, (C) triisopropanolamine, (D) 8-hydroxy quinoline.

The results were as follows, a range indicating the averages from different experiments.

| Example | Additive | Gel % after hr | | | | |
|---|---|---|---|---|---|---|
| | | 0 | 1 | 2 | 5 | 24 |
| A | None | 45 | 65 | 74 | | |
| 1 | A | 0.6-2 | 57 | 62 | 68 | |
| 2 | B | 1-3 | 46 | 62 | | |
| 3 | C | 0.3-6 | 0.6 | 2 | 14 | 60 |
| 4 | D | 0.1-1 | 0.1 | 0.95 | 20 | 57 |

with each of additives A-D the precure (in the extruder) was inhibited (see zero hr gel content).

### Example 5

The process of Example 3 was repeated with 0.5% of the triisopropanolamine (C) instead of 1%. The gel contents after the specified hours were as follows

| Hour | Gel content % for C |
|---|---|
| 0 | 0.9 |
| 1 | 4 |
| 2 | 19 |
| 5 | 32 |
| 24 | 62 |

### Example 6

The process of Examples 1-4 were repeated using 1% of triethanolamine and the gel % at zero hour (to test precure inhibition) was 18%.

## Claims

1. A composition capable of being crosslinked by the action of water in the presence of a silanol condensation catalyst comprising (i) a silyl polymer and (ii) at least one functional organic compound I which comprises at least one hydroxyl group and at least one other group which is selected from the group consisting of amino and carboxyl groups.

2. A composition as claimed in claim 1 wherein the functional organic compound I is a hydroxy carboxylic acid.

3. A composition as claimed in claim 2 wherein the hydroxy carboxylic acid comprises at least two hydroxy groups.

4. A composition as claimed in either claim 2 or claim 3 wherein the hydroxy carboxylic acid is either citric acid or mucic acid.

5. A composition as claimed in claim 1 wherein the functional organic compound I contains at least one hydroxy group and at least one amino group.

6. A composition as claimed in claim 5 wherein the functional organic compound I is an alkanolamine.

7. A composition as claimed in claim 6 wherein the alkanolamine contains at least two hydroxy groups.

8. A composition as claimed in claim 6 wherein the alkanolamine contains at least one tertiary amino group.

9. A composition as claimed in claim 7 wherein the functional organic compound I is triisopropanolamine.

10. A composition as claimed in claim 5 wherein the functional organic compound I is a hydroxy quinoline.

11. A composition as claimed in any one of the preceding claims wherein the composition further comprises a silanol condensation catalyst.

12. A masterbatch concentrate comprising an inert thermoplastic polymer compatible with a silyl polymer, and at least one functional organic compound I as defined in any one of claims 1 to 10.

13. A masterbatch concentrate as claimed in claim 12 wherein the concentrate further comprises a silanol condensation catalyst.

14. A method of forming a crosslinked polymer comprising contacting a composition capable of being crosslinked as claimed in any one of claims 1 to 10 with water.

15. A method of forming a crosslinked polymer as claimed in claim 14 wherein the composition is thermoformed prior to contacting the composition with water.

16. The use as a premature crosslinking inhibitor for silyl polymers of a functional organic compound I as defined in any one of the claims 1 to 10.
